# EUROPEAN PATENT APPLICATION

(11) **EP 4 550 491 A1**
(43) Date of publication of application: **07.05.2025**
(21) Application number: 23852822.8
(22) Date of filing: 28.07.2023
(51) Int. Cl.: H01M 10/04, H01M 50/211, B65H 45/10

(54) **FOLDING DEVICE AND FOLDING METHOD**

(30) Priority: 08.08.2022 KR 20220098868
(71) Applicant: LG Energy Solution, Ltd., Seoul 07335 (KR)
(72) Inventor: LEE, Ji Woon, Daejeon 34122 (KR); KANG, Tae Won, Daejeon 34122 (KR); LEE, Chung Hee, Daejeon 34122 (KR); JEONG, Chang Uk, Daejeon 34122 (KR)
(74) Representative: Plasseraud IP
(86) International application number: PCT/KR2023/011066
(87) International publication number: WO 2024/034941

(57) **Abstract**

A folding apparatus according to an embodiment of the present invention may fold a terrace of a pouch type battery cell. The folding apparatus may include: a pair of clamping parts facing each other with the terrace therebetween; and a folding mechanism disposed outside the pair of clamping parts to fold the terrace. Each of the clamping parts may include: a body that rotates around a rotary shaft parallel to the terrace; a first protrusion that protrudes from one side portion of the body and clamps the terrace; and a second protrusion protruding from the other side portion of the body, wherein, as the body rotates, the second protrusion clamps an inner portion of the terrace than the first protrusion does.

## Description

### TECHNICAL FIELD

### CROSS-REFERENCE TO RELATED APPLICATION

The present application claims the benefit of the priority of Korean Patent Application No. 10-2022-0098868, filed on August 8, 2022, which is hereby incorporated by reference in its entirety.

### TECHNICAL FIELD

The present invention relates to an apparatus and method for folding a terrace of a pouch type battery case.

### BACKGROUND ART

Recently, secondary batteries receive attention as power sources for electric vehicles (EV), hybrid electric vehicles (HEV) and the like, which are proposed as solutions to solve problems such as air pollution caused by existing gasoline vehicles, diesel vehicles, and the like, using fossil fuel.

While a small-sized mobile device uses one or a few secondary batteries, a medium to large-sized device such as electric vehicle, uses a battery module, in which a plurality of secondary batteries are electrically connected to each other, or a battery pack, in which a plurality of battery modules are electrically connected to each other, due to the need for high output and large capacity.

It can be said that one of the secondary batteries that attract the most interest among currently commercialized secondary batteries is a lithium secondary battery. According to the shape of an exterior material, the lithium secondary battery may be classified into a can type, a prismatic type, a pouch type, and the like. Among these batteries, pouch type secondary batteries are widely used in medium to large-sized battery modules due to advantages of having high energy density and of being easily stacked.

A pouch type battery cell has a structure in which an electrode assembly is accommodated in a pouch type battery case, and a terrace of the battery case is sealed. A process of folding at least once the terrace from which an electrode lead does not protrude is performed in order to reduce energy density per volume of the battery cell and to improve sealability. As one example, the sealed terrace may be folded two times in the process, and this is generally termed a double side folding (DSF).

According to the related art, the terrace is folded through a plurality of processes that are performed at different positions while the battery cell moves along a manufacturing line. Accordingly, the battery cell needs to be aligned in each of the plurality of processes, and thus there are problems that the battery cell is damaged by the aligning operation, folding consistency of the terrace is reduced, and the manufacturing line is complicated.

### DISCLOSURE OF THE INVENTION

### TECHNICAL PROBLEM

An object of the present invention for solving the above problems is to provide a folding apparatus and folding method capable of folding a terrace multiple times in a state in which a pouch type battery cell is aligned once.

### TECHNICAL SOLUTION

A folding apparatus according to an embodiment of the present invention may fold a terrace of a pouch type battery cell. The folding apparatus may include: a pair of clamping parts facing each other with the terrace therebetween; and a folding mechanism disposed outside the pair of clamping parts to fold the terrace. Each of the clamping parts may include: a body that rotates around a rotary shaft parallel to the terrace; a first protrusion that protrudes from one side portion of the body and clamps the terrace; and a second protrusion protruding from the other side portion of the body, wherein, as the body rotates, the second protrusion clamps an inner portion of the terrace than the first protrusion does.

The first protrusion may include an inclined surface that is provided to be inclined with respect to the terrace and is in contact with the terrace.

The respective inclined surfaces of the pair of clamping parts may be provided to be parallel to each other.

An area on which the inclined surface is in contact with the terrace may be greater than an area on which the second protrusion is in contact with the terrace.

The clamping part may be provided to be movable so that a distance between the rotary shaft and the terrace varies.

At least one of the pair of clamping parts may heat the terrace.

The folding mechanism may include: a first body that moves so that when the first protrusion of the clamping part clamps the terrace, the terrace is folded toward the first protrusion; and a second body that moves so that when the pair of clamping parts are far away from the terrace, the terrace is further folded toward the first body.

When the first body and the second body are far away from the terrace, the clamping part may rotate so that the second protrusion clamps the terrace.

When the second protrusion of the clamping part clamps the terrace, the first body may additionally fold the terrace while moving.

Each of the first body and the second body may be provided to be movable biaxially in a first direction, which is parallel to a thickness direction of the battery cell, and a second direction perpendicular to the first direction.

At least one of the first body or the second body may heat the terrace.

A folding method according to an embodiment of the present invention may fold a terrace of a pouch type battery cell. The folding method may include: clamping the terrace at both sides by respective first protrusions of a pair of clamping parts; folding the terrace by a first body disposed outside the pair of clamping parts; allowing the pair of clamping parts to be far away from the terrace; and moving a second body to face the first body with the terrace therebetween so as to further fold the terrace by the second body.

A region, which is clamped by each of the first protrusions, of the terrace may be clamped to be inclined along an inclined surface of the first protrusion.

In the folding of the terrace by the first body, the terrace may be folded toward an outer surface of the first protrusion of one of the pair of clamping parts in a direction opposite to the inclined surface.

In the further folding of the terrace by the second body, the terrace may be overlappingly folded between the first body and the second body.

The folding method may further include: separating the first body and the second body from the terrace; rotating the pair of clamping parts so that respective second protrusions of the pair of clamping parts clamp an inner portion of the terrace than the first protrusions do; and additionally folding the terrace by the first body.

In the additionally folding of the terrace by the first body, the terrace may be folded toward an outer surface of the second protrusion of one of the pair of clamping parts.

### ADVANTAGEOUS EFFECTS

According to the preferred embodiments of the present invention, the terrace may be folded multiple times in the state in which the battery cell is aligned once. Accordingly, unlike the related art, the battery cell may be prevented from being damaged by the plurality of aligning operations.

As the damage of the battery cell is minimized, the stab on the outer appearance and the damage to the insulation resistance may be minimized.

Moreover, the folding consistency of the terrace may be improved, and the folding deviation between the products may be minimized.

Furthermore, the battery cell may be simplified in terms of the configuration and the control of the manufacturing line.

In addition, the effects may be included which could be easily predicted by those of ordinary skill in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is an assembly view of a pouch type battery cell.
FIG. 2 is a plan view of a pouch type battery cell.
FIG. 3 is a schematic view of a folding apparatus according to an embodiment of the present invention.
FIGS. 4 to 8 are schematic views sequentially illustrating operations of a folding apparatus according to embodiment of the present invention.
FIG. 9 is a flowchart of a folding method according to another embodiment of the present invention.

### MODE FOR CARRYING OUT THE INVENTION

Hereinafter, preferred embodiments of the present invention will be described in detail with reference to the accompanying drawings to enable those of ordinary skill in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

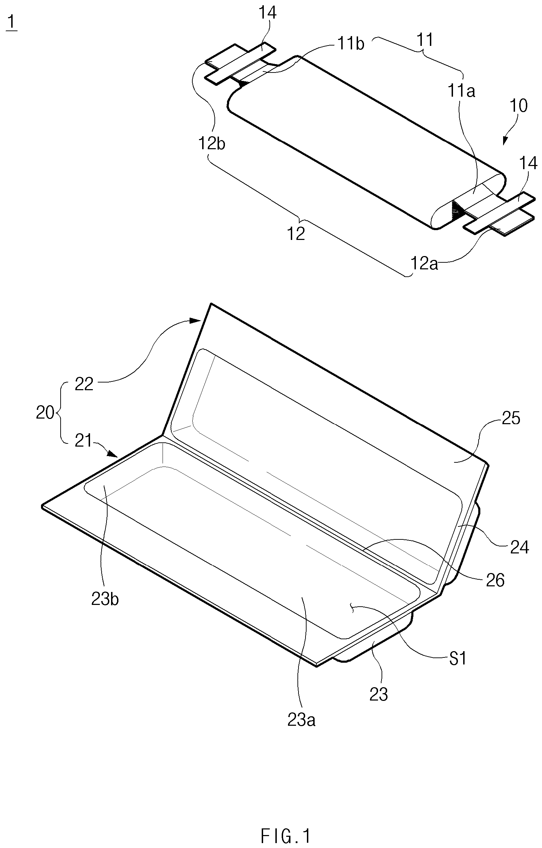

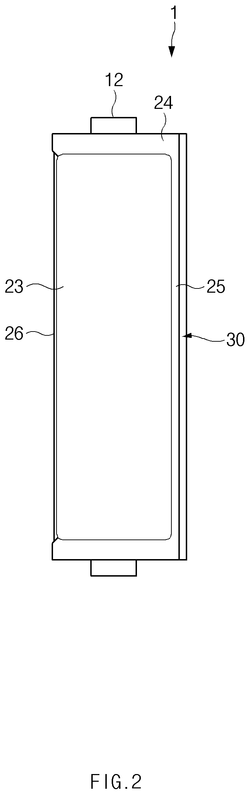

FIG. 1 is an assembly view of a pouch type battery cell. FIG. 2 is a plan view of a pouch type battery cell.

A pouch type battery cell 1 (hereinafter referred to as the "battery cell") may include an electrode assembly 10 and a pouch type battery case 20 (hereinafter referred to as the "pouch") .

The electrode assembly 10 may be provided by stacking a positive electrode and a negative electrode alternately with a separator therebetween. That is, the electrode assembly 10 may include the plurality of electrodes, and the separator interposed between the plurality of electrodes in order to insulates the plurality of electrodes from each other. The electrode assembly 10 together with an electrolyte may be accommodated in the pouch 20, and in more detail, in a pair of cup parts 22 to be described later.

The electrode assembly 10 may include a stacked type, a jelly-roll-type, a stack and folding type, and the like, and the type thereof is not limited.

The electrode assembly 10 may include an electrode tab 11. The electrode tab 11 may be connected to each of the positive electrode and the negative electrode of the electrode assembly 10, and protrude from the electrode assembly 10 to the outside so as to serve as a path through which an electron moves between the inside and the outside of the electrode assembly 10.

The electrode tab 11 may be provided by cutting out a non-coating portion of an electrode current collector, or may be provided by connecting a separate conductive member to the non-coating portion through ultrasonic welding or the like.

The electrode tab 11 may include a positive electrode tab 11a connected to the positive electrode, and a negative electrode tab 11b connected to the negative electrode. The positive electrode tab 11a and the negative electrode tab 11b may protrude in different directions of the electrode tab 11, but an embodiment of the present invention is not limited thereto. For example, the positive electrode tab 11a and the negative electrode tab 11b may protrude in various directions such as protruding from one side in the same direction so as to be parallel to each other.

An electrode lead 12 that supplies electricity to the outside of a secondary battery 1 may be connected to the electrode tab 11 of the electrode assembly 10 through spot welding or the like. The electrode lead 12 may have a portion surrounded by an insulation part 14. The insulation part 14 may be disposed to be limited on a terrace 24 or 25 on which a first case 21 and a second case 22 of the pouch 20 are thermally fused to each other. Accordingly, the insulation part 14 may insulate the electrode lead 12 from the pouch 20, and maintain sealing of the pouch 20. In general, an insulation tape that is easily attached to the electrode lead 12 and has a relatively small thickness may be much used as the insulation part 14. However, an embodiment of the present invention is not limited thereto, and various members may be used as long as the members are capable of insulating the electrode lead 12.

The electrode lead 12 may have one end connected to the electrode tab 11, and the other end protruding to the outside of the pouch 20. The electrode lead 12 may include a positive electrode lead 12a connected to the positive electrode tab 11a, and a negative electrode lead 12b connected to the negative electrode tab 11b.

The electrode lead 12 may electrically connect the electrode assembly 10 to the outside. In addition, as each of the positive electrode tab 11a and the negative electrode tab 11b protrudes in various directions, each of the positive electrode lead 12a and the negative electrode lead 12b may also extend in various directions.

The pouch 20 may accommodate the electrode assembly 10 therein, and may be provided by molding a laminate sheet. In more detail, when drawing molding is performed on the laminate sheet having flexibility by using a die, a punch, and the like, a portion of the laminate sheet may be stretched to provide a cup part 23 including an accommodation space S1 having a pocket shape so that the pouch 20 is manufactured.

The pouch 20 may accommodate the electrode assembly 10 so that a portion of the electrode lead 12 is exposed, and then be sealed. This pouch 20 may include a pair of cases 21 and 22, and in more detail, the first case 21 and the second case 22.

Hereinafter, as illustrated in FIG. 1, a case in which one side of the first case 21 is connected to one side of the second case 22 will be described as an example. However, an embodiment of the present invention is not limited thereto, and the first case 21 and the second case 22 may also be separated from each other and manufactured separately.

The cup part 23 may be provided in at least one of the first case 21 or the second case 22 so that the accommodating space S1 capable of accommodating the electrode assembly 10 is provided. The cup part 23 may have a recessed shape. The cup part 23 may include a bottom surface 23a and a circumferential surface 23b.

As illustrated in FIG. 1, the first case 21 and the second case 22 may be connected to each other through a bridge 26. The bridge 26 may be provided between a pair of cup parts 23. The bridge 26 may extend to be parallel to a full-length or full-width direction of the electrode assembly 10. However, an embodiment of the present invention is not limited thereto, and the first case 21 and the second case 22 may be provided to be separated from each other.

Each of the cases 21 and 22 may include the terraces 24 and 25 disposed on a circumference of the cup part 23. In more detail, the terraces 24 and 25 may include a first terrace 24 parallel to one of a full length and a full width of the electrode assembly 10, and a second terrace 25 parallel to the other.

For example, the second terrace 25 may be disposed at a side opposite to the bridge 26 on the basis of the cup part 23, and the first terrace 24 may connect an end of the second terrace 25 and an end of the bridge 26 to each other.

When the bridge 26 is folded, the terraces 24 and 25 of the first case 21 and the terraces 24 and 25 of the second case 22 may be in contact with each other. Here, the insulation part 14 of the electrode assembly 10 may be disposed between the terraces 24 or 25 of the pair of cases 21 and 22. For example, the insulation part 14 may be disposed between the first terraces 24 of the pair of cases 21 and 22. The terraces 24 and 25 of the first case 21 and the terraces 24 and 25 of the second case 22 may be sealed to each other in a state of being in contact with each other.

The pouch 20 may include a side folding part 30 provided by folding one of the terraces 24 and 25. In more detail, one of the terraces 24 and 25, from which the electrode lead 12 does not protrude, may be folded to provide the side folding part 30.

For example, as illustrated in FIG. 2, when the electrode lead 12 protrudes to the outside of the pouch 20 through the first terraces 24, the second terraces 25 may be folded to provide the side folding part 30. That is, the side folding part 30 may be provided at the side opposite to the bridge 26. When the first case 21 and the second case 22 are provided separately without being connected through the bridge 26, the side folding part 30 may be provided on each of both side portions of the battery cell 1.

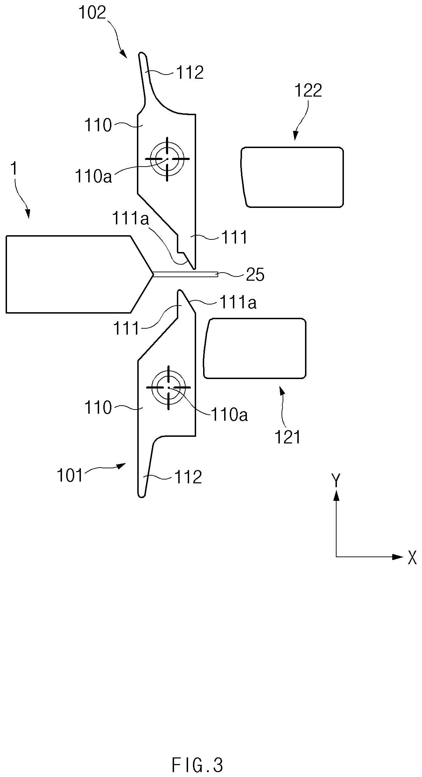

FIG. 3 is a schematic view of a folding apparatus according to embodiment of the present invention.

The folding apparatus according to embodiment of the present invention may be an apparatus that provides the side folding part 30. The folding apparatus may fold one, from which the electrode lead 12 does not protrude, of the sealed terraces 24 and 25 of the battery cell 1. For example, the folding apparatus may fold the second terrace 25. Hereinafter, the terrace is denoted as a reference numeral "25" for convenience of explanation.

The folding apparatus may include clamping parts 101 and 102 and folding mechanisms 121 and 122.

The clamping parts 101 and 102 may be provided in a pair disposed to face each other with a portion of the terrace 25 disposed therebetween. The terrace 25 may pass between the clamping parts 101 and 102 to protrude to the outside. The pair of clamping parts 101 and 102 may include a first clamping part 101 disposed at one side of the terrace 25, and a second clamping part 102 disposed at the other side of the terrace 25.

Each of the clamping parts 101 and 102 may be provided to be rotatable around a rotary shaft 110a. The rotary shaft 110a may be parallel to the terrace 25. As the terrace 25 is parallel to a full-length or full-width direction of the battery cell 1 as described above, the rotary shaft 110a may also be parallel to the full-length or full-width direction of the battery cell 1.

Each of the clamping parts 101 and 102 may be provided to be movable so that a distance between the rotary shaft 110a and the terrace 25 varies. As one example, each of the clamping parts 101 and 102 may move to be parallel to a thickness direction of the battery cell 1 (direction parallel to a Y-axis in FIG. 3).

Each of the clamping parts 101 and 102 may include a main body 110, a first protrusion 111, and a second protrusion 112.

The main body 110 may rotate around the rotary shaft 110a. The rotary shaft 110a may extend so as to pass through a central portion of the main body 110. The main body 110 may extend to be parallel to the terrace 25. In addition, the main body 110 may have a predetermined width in the thickness direction of the battery cell 1 (direction parallel to the Y-axis in FIG. 3), and have a predetermined thickness in a protruding direction of the terrace 25 (direction parallel to an X-axis in FIG. 3).

The first protrusion 111 may protrude from one side portion of the main body 110, and the second protrusion 112 may protrude from the other side portion of the main body 110. For example, the first protrusion 111 may protrude toward the terrace 25, and the second protrusion 112 may protrude toward a side opposite to the terrace 25.

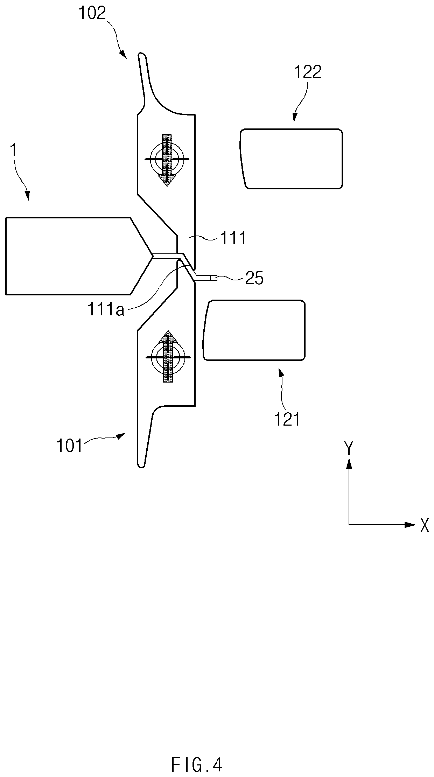

The first protrusion 111 may clamp the terrace 25 (see FIG. 4). In more detail, when the main body 110 is in an initial state, the first protrusion 111 may clamp the terrace 25. The initial state may mean a state before the main body 110 rotates.

The terrace 25 may be clamped between the first protrusion 111 of the first clamping part 101 and the first protrusion 111 of the second clamping part 102.

The first protrusion 111 may be provided to be inclined with respect to the terrace 25, and include an inclined surface 111a that is in contact with the terrace 25. The respective inclined surfaces 111a of the first protrusions 111 of the pair of clamping parts 101 and 102 may be provided to be parallel to each other. That is, the respective first protrusions 111 of the pair of clamping parts 101 and 102 may have an asymmetric shape. Thus, a portion of the terrace 25 may be folded and clamped to be inclined between the pair of inclined surfaces 111a.

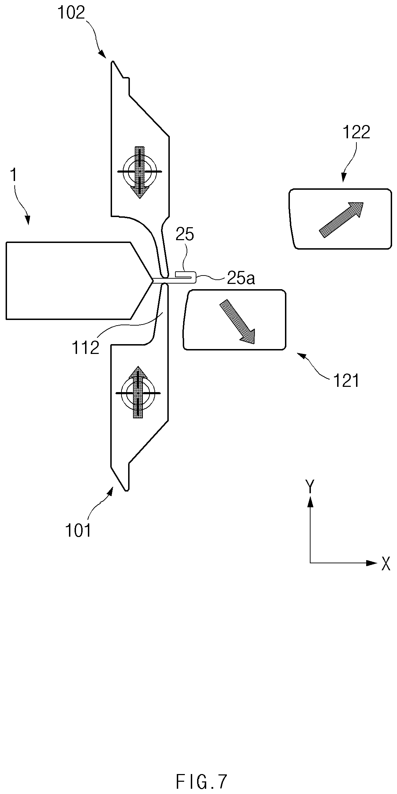

The second protrusion 112 may clamp an inner portion of the terrace 25 than the first protrusion 111 does (see FIG. 7). In more detail, when the main body 110 is in a rotated state, the second protrusion 112 may clamp an inner portion than the portion, which has been clamped by the first protrusion 111, of the terrace 25. The terrace 25 may be clamped between the second protrusion 112 of the first clamping part 101 and the second protrusion 112 of the second clamping part 102.

An area on which the inclined surface 111a of the first protrusion 111 is in contact with the terrace 25 may be greater than an area on which the second protrusion 112 is in contact with the terrace 25.

The folding mechanisms 121 and 122 may be disposed outside the pair of clamping parts 101 and 102 to fold the terrace 25. The folding mechanisms 121 and 122 may fold an outer portion of the terrace 25, which protrudes outward from the pair of clamping parts 101 and 102.

In more detail, the folding mechanisms 121 and 122 may include a first body 121 and a second body 122. Each of the first body 121 and the second body 122 may have an approximately block shape.

The first body 121 may be disposed outside the first clamping part 101, and the second body 122 may be disposed outside the second clamping part 122.

The first body 121 and the second body 122 may be disposed at both sides of the terrace 25, respectively. In more detail, the first body 121 may be disposed at one side of the terrace 25 or a virtual boundary to which the terrace 25 is expanded, and the second body 122 may be disposed at the other side.

Each of the first body 121 and the second body 122 may be provided to be movable biaxially in a first direction and a second direction perpendicular to the first direction. For example, the first direction may be parallel to the thickness direction of the battery cell 1 (direction parallel to the Y-axis in FIG. 3), and the second direction may be parallel to the protruding direction of the terrace 25 (direction parallel to the X-axis in FIG. 3).

Hereinafter, respective operations of the first body 121 and the second body 122 will be described in detail.

At least one of the first clamping part 101, the second clamping part 102, the first body 121, or the second body 122 may heat the terrace 25. Preferably, at least one of the pair of clamping parts 101 and 102 may heat the terrace 25. At least one of the first body 121 or the second body 122 may also heat the terrace 25.

In more detail, during the folding of the terrace 25, at least one of the first clamping part 101, the second clamping part 102, the first body 121, or the second body 122 may be in contact with the terrace 25 in a state of being heated to a high temperature. The high temperature is a temperature, which is remarkably higher than the room temperature, and may mean a temperature that may affect the moldability of the terrace 25. Accordingly, the terrace 25 may be easily folded, and the folded terrace 25 may be prevented from being spread again as much as possible.

FIGS. 4 to 8 are schematic views sequentially illustrating operations of a folding apparatus according to embodiment of the present invention.

As illustrated in FIG. 4, respective first protrusions 111 of a pair of clamping parts 101 and 102 may clamp a terrace 25 at both sides. In more detail, the pair of clamping parts 101 and 102 may move so as to be close to each other. The pair of clamping parts 101 and 102 may move to be parallel to a thickness direction of a battery cell 1. Here, each of the pair of clamping parts 101 and 102 may be in an initial state before rotating.

Accordingly, a portion of the terrace 25 may be folded and clamped along an inclined surface 111a of each of the first protrusions 111. For convenience of explanation, a portion, which is in contact with the inclined surface 111a, of the terrace 25 may be termed a first region, a portion disposed outward from the first region may be termed a second region, and a portion disposed inward from the first region may be termed a third region. In this case, the second region and the third region may be provided to be different in height in the thickness direction of the battery cell 1, and the first region may be provided to be inclined and connect the second region to the third region.

However, an embodiment of the present invention is not limited thereto, and may provide a modified example in which the first protrusion 111 does not include the inclined surface 111a that is inclined. In this case, even when the terrace 25 is clamped between the first protrusions 111 of the pair of clamping parts 101 and 102, the terrace 25 may be maintained to be flat without being folded.

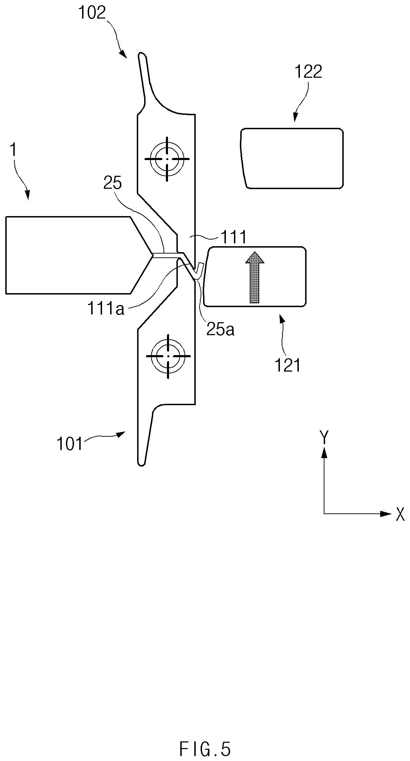

As illustrated in FIG. 5, when the first protrusions 111 of the clamping parts 101 and 102 clamp the terrace 25, a first body 121 may move to fold the terrace 25.

In more detail, in a state in which the first region of the terrace 25 is clamped between the first protrusions 111 of the pair of clamping parts 101 and 102, the first body 121 may move in the thickness of the battery cell 1, and may fold the second region of the terrace 25, which protrudes outward from the first protrusion 111.

The first body 121 may move to be parallel to the thickness of the battery cell 1 so that the terrace 25 is folded toward the first protrusion 111. The first body 121 may move from the outside of the first clamping part 101 to the outside of the second clamping part 102, and may push and fold the terrace 25. As the first body 121 moves, the terrace 25 may be folded along an inner surface of the first body 121.

The first body 121 may fold the terrace 25 so that the terrace 25 is inclined in a direction opposite to an inclination of the inclined surface 111a of the first protrusion 111. For example, the first region of the terrace 25 may be provided to be inclined downward toward the outside along the inclined surface 111a, and the first body 121 may fold the second region of the terrace 25 so that the second region is inclined upward toward the outside.

Accordingly, the terrace 25 may be folded at a first angle. In more detail, the second region of the terrace 25 may be folded at the first angle (e.g., 90 degrees) on the basis of an initial position.

In more detail, the second region of the terrace 25, which protrudes outward from the first protrusion 111, may be folded to have an acute angle with respect to the first region clamped by the first protrusion 111. In this case, a portion that connects the first region and the second region of the terrace 25 to each other may form a first folding portion 25a.

That is, as the inclined surface 111a of the first protrusion 111 is provided to be inclined, the first body 111 may fold the terrace 25 so that the first folding portion 25a has an acute angle. Accordingly, the first folding portion 25a may be more reliably folded, and spring-back in which the first folding portion 25a is spread again may be minimized.

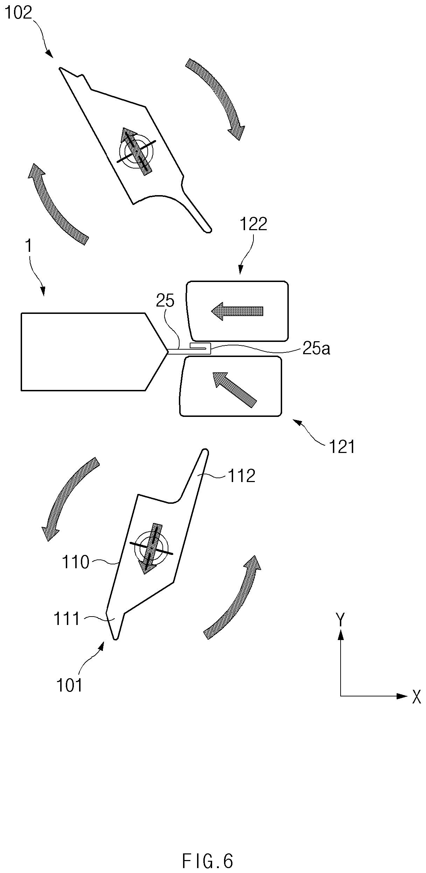

As illustrated in FIG. 6, after the first body 121 folds the terrace 25, the pair of clamping parts 101 and 102 may be far away from the terrace 25, and the first body 121 may move to a preset standby position. In more detail, the first body 121 may move so as to be in contact with the first region of the terrace 25 at one side of the terrace 25.

The pair of clamping parts 101 and 102 may move so as to be far away from each other. The pair of clamping parts 101 and 102 may move in the thickness direction of the battery cell 1. In a state in which the pair of clamping parts 101 and 102 are sufficiently far away from the terrace 25, a second protrusion 112 may rotate so as to face the terrace 25.

When the pair of clamping parts 101 and 102 are far away from the terrace 25, the second body 122 may further fold the terrace 25. In more detail, the second body 122 together with the first body 121 may further fold the terrace 25.

The second body 122 may move to a position at which the second body 122 faces the first body 121 with the terrace 25 therebetween. The second body 122 may move from the outside to the inside. In more detail, the second body 122 may fold the terrace 25 while moving in a direction (e.g., direction opposite to an X-axis) opposite to a protruding direction of the terrace 25.

The terrace 25 may be pressed and folded between the second body 122 and the first body 121. In more detail, the second body 122 may fold the second region of the terrace 25 so that the second region overlaps the first region.

Accordingly, the terrace 25 may be further folded at a second angle (e.g., 180 degrees) that is greater than the first angle. That is, the first folding portion 25a of the terrace 25 may be further folded.

In more detail, the second region of the terrace 25 may be folded at the second angle (e.g., 180 degrees) on the basis of the initial position. Preferably, the terrace 25 may be folded so that the second region overlaps the first region.

As illustrated in FIG. 7, when the first body 121 and the second body 122 are far away from the terrace 25, the clamping parts 101 and 102 rotate so that the second protrusions 112 clamp the terrace 25.

In more detail, the first body 121 and the second body 122 may move to be far away from the terrace 25, the respective second protrusions 112 of the pair of clamping parts 101 and 102 may clamp the terrace 25 at both sides. The pair of clamping parts 101 and 102 may move so as to be close to each other in a rotated state. The pair of clamping parts 101 and 102 may move to be parallel to the thickness direction of the battery cell 1.

The second protrusions 112 of the pair of clamping parts 101 and 102 may clamp the terrace 25, and in more detail, the third region of the terrace 25 at both the sides.

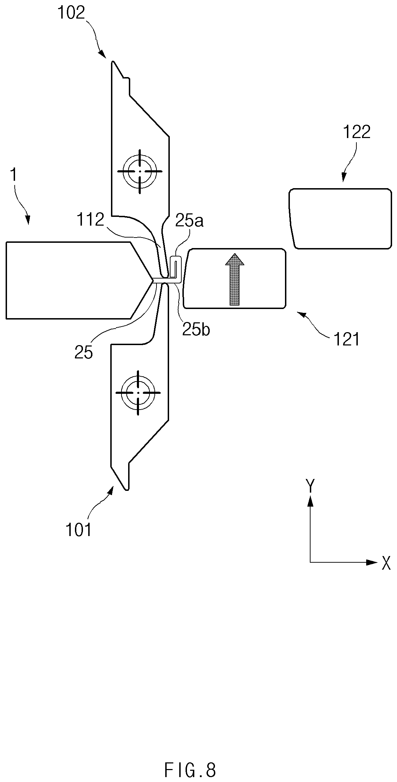

As illustrated in FIG. 8, when the second protrusions 112 of the clamping parts 101 and 102 clamp the terrace 25, the first body 121 may additionally fold the terrace 25 while moving.

In more detail, the first body 121 that has been far away from the terrace 25 may move to a preset folding position after the second protrusions 112 clamp the terrace 25. The first body 121 may move to the outside of the first clamping part 101, and in more detail, of the second protrusion 112 of the first clamping part 101.

Thereafter, the first body 121 may further fold the overlappingly folded terrace 25 while moving in the thickness direction of the battery cell 1.

The first body 121 may move from the outside of the second protrusion 112 of the first clamping part 101 to the outside of the second protrusion 112 of the second clamping part 102. As the first body 121 moves, the terrace 25 protruding outward from the second protrusion 112 may be folded along the inner surface of the first body 121. As the first body 121 moves, the terrace 25 protruding outward from the second protrusion 112 may be folded toward an outer surface of the second protrusion 112 of the second clamping part 102.

Accordingly, a second folding portion 25b may be provided while the terrace 25 is additionally folded. The second folding portion 25b may connect a portion, which is clamped by the second protrusion 112, of the terrace 25 to a portion protruding outward from the second protrusion 112. The second folding portion 25b may be provided inward from the first folding portion 25a.

As above, the terrace 25 may be folded multiple times and molded as the side folding part 30 through the series of operations illustrated in FIGS. 4 to 8. The operations may be performed while maintaining a state in which the battery cell 1, in more detail, the cup part 23 of the battery cell 1, is fixed by a fixing jig (not shown) or the like. That is, the folding apparatus according to an embodiment of the present invention may fold the terrace 25 multiple times in a state in which the battery cell 1 is aligned once.

Accordingly, unlike the related art, there are advantages that the battery cell 1 may be prevented from being damaged by a plurality of aligning operations, the folding consistency of the terrace 25 may be improved, and the manufacturing line is simplified.

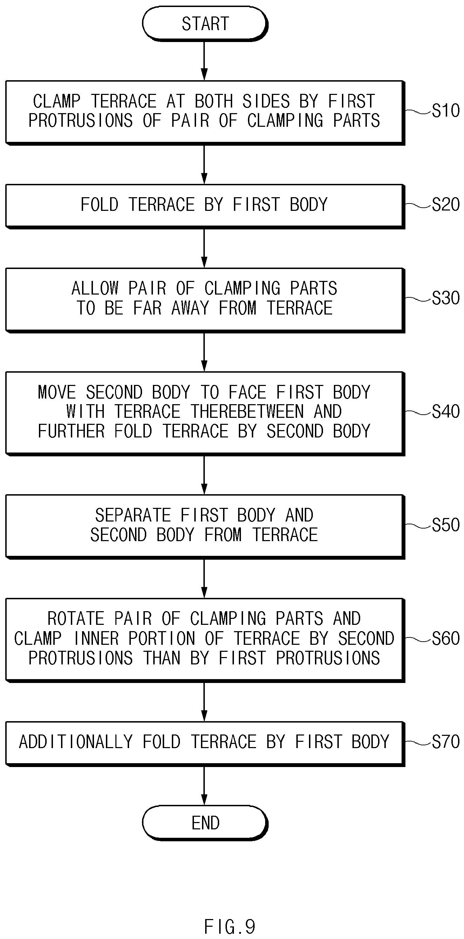

FIG. 9 is a flowchart of a folding method according to another embodiment of the present invention.

Hereinafter, a folding method using the folding apparatus described above will be described as another embodiment of the present invention.

The folding method may include clamping a terrace 25 at both sides by respective first protrusions 111 of a pair of clamping parts 101 and 102 (S10) (hereinafter referred to as the "first clamping process"), folding the terrace 25 by a first body 121 (S20) (hereinafter referred to as the "first folding process"), allowing the pair of clamping parts 101 and 102 to be far away from the terrace 25 (S30) (hereinafter referred to as the "first separating process"), and moving a second body 122 to face the first body 121 with the terrace 25 therebetween so as to further fold the terrace 25 by the second body 122 (S40) (hereinafter referred to as the "second folding process").

In the first clamping process (S10), the respective first protrusions 111 of the pair of clamping parts 101 and 102 may clamp the terrace 25 of an aligned battery cell 1 at both the sides. A region, that is, the first region, which is clamped by each of the first protrusions 111, of the terrace 25 may be clamped to be inclined along an inclined surface 111a of the first protrusion 111.

The contents described above with reference to FIG. 4 apply to the first clamping process (S10).

In the first folding process (S20), the terrace 25 may be folded toward an outer surface of the first protrusion 111 of one of the pair of clamping parts 101 and 102 in a direction opposite to the inclined surface 111a. In more detail, the first body 121 may move from the outside of the first protrusion 111 of a first clamping part 101 to the outside of the first protrusion 111 of a second clamping part 102. According to the movement of the first body 121, the terrace 25 may be folded toward the outer surface of the first protrusion 111 of the second clamping part 102. Accordingly, a first folding portion 25a may be formed on the terrace 25. As the terrace 25 is folded in the direction opposite to the inclined surface 111a, the first folding portion 25a may have an acute angle.

The contents described above with reference to FIG. 5 apply to the first folding process (S20).

In the first separating process (S30), the pair of clamping parts 101 and 102 may be far away from the terrace 25. Each of the clamping parts 101 and 102 may be sufficiently far away from the terrace 25, and then rotate so that a second protrusion 112 faces the terrace 25. Each of the clamping parts 101 and 102 may rotate while moving, or may rotate after completely moving.

In the second folding process (S40), the terrace 25 may be overlappingly folded between the first body 122 and the second body 121. In more detail, the first body 121 may move to one side of the terrace 25 after the previous folding of the terrace 25, and the second body 122 may further fold the terrace 25 while moving to the other side of the terrace 25. That is, the first folding portion 25a may be further folded.

The contents described above with reference to FIG. 6 apply to the first separating process (S30) and the second folding process (S40).

The folding method may further include separating the first body 121 and the second body 122 from the terrace 25 (S50) (hereinafter referred to as the "second separating process"), rotating the pair of clamping parts 101 and 102 and clamping an inner portion of the terrace 25 by the second protrusion 112 than by the first protrusion 111 (S60) (hereinafter referred to as the "second clamping process"), and additionally folding the terrace 25 by the first body 121 (S70) (hereinafter referred to as the "additional folding process") .

In the second separating process (S50), the first body 121 and the second body 122 may be far away from the terrace 25. The first body 121 and the second body 122 may move so as not to interfere with the pair of clamping parts 101 and 102 in the subsequent second clamping process (S60).

The second body 122 may farther move than the first body 121. This is because that the first body 121 needs to return to a preset folding position for the subsequent additional folding process (S70).

In the second clamping process (S60), the respective second protrusions 112 of the pair of clamping parts 101 and 102 may clamp the terrace 25 at both the sides. A portion, which is clamped by the second protrusions 112, of the terrace 25 may be disposed inward from the portion having clamped by the first protrusions 111 in the previous first clamping process (S10).

The contents described above with reference to FIG. 7 apply to the second separating process (S50) and the second clamping process (S60).

In the additional folding process (S70), the first body 121 that has been far away from the terrace 25 may move to the preset folding position, and then may additionally fold the terrace 25. The first body 121 may move from the outside of the second protrusion 112 of the first clamping part 101 to the outside of the second protrusion 112 of the second clamping part 102. Accordingly, the terrace 25 may be additionally folded so that the overlapping portion of the terrace 25 faces an outer surface of the second protrusion 112 of the second clamping part 102. Accordingly, a second folding portion 25b may be formed on the terrace 25.

The contents described above with reference to FIG. 8 apply to the additional folding process (S70).

At least one of the first clamping part 101, the second clamping part 102, the first body 121, or the second body 122 may perform the first clamping process (S10) to the additional folding process (S70) in a state of being heated to a high temperature. Accordingly, the terrace 25 may be easily folded, and the folded terrace 25 may be prevented from being spread again as much as possible.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 1: | Pouch type battery cell | 25: | Terrace |
| 101: | First clamping part | 102: | Second clamping part |
| 110: | Main body | 110a: | Rotary shaft |
| 111: | First protrusion | 111a: | Inclined surface |
| 112: | Second protrusion | 121: | First body |
| 122: | Second body | | |

## Claims

1. A folding apparatus for folding a terrace of a pouch type battery cell, the folding apparatus comprising:
a pair of clamping parts facing each other with the terrace therebetween; and
a folding mechanism disposed outside the pair of clamping parts to fold the terrace,
wherein each of the clamping parts comprises:
a body configured to rotate around a rotary shaft parallel to the terrace;
a first protrusion protruding from one side portion of the body and configured to clamp the terrace; and
a second protrusion protruding from the other side portion of the body, wherein, as the body rotates, the second protrusion clamps an inner portion of the terrace than the first protrusion does.

2. The folding apparatus of claim 1, wherein the first protrusion comprises an inclined surface that is provided to be inclined with respect to the terrace and is in contact with the terrace.

3. The folding apparatus of claim 2, wherein the respective inclined surfaces of the pair of clamping parts are provided to be parallel to each other.

4. The folding apparatus of claim 2, wherein an area on which the inclined surface is in contact with the terrace is greater than an area on which the second protrusion is in contact with the terrace.

5. The folding apparatus of claim 1, wherein the clamping part is provided to be movable so that a distance between the rotary shaft and the terrace varies.

6. The folding apparatus of claim 1, wherein at least one of the pair of clamping parts is configured to heat the terrace.

7. The folding apparatus of claim 1, wherein the folding mechanism comprises:
a first body configured to move so that when the first protrusion of the clamping part clamps the terrace, the terrace is folded toward the first protrusion; and
a second body configured to move so that when the pair of clamping parts are far away from the terrace, the terrace is further folded toward the first body.

8. The folding apparatus of claim 7, wherein, when the first body and the second body are far away from the terrace, the clamping part rotates so that the second protrusion clamps the terrace.

9. The folding apparatus of claim 8, wherein, when the second protrusion of the clamping part clamps the terrace, the first body is configured to additionally fold the terrace while moving.

10. The folding apparatus of claim 7, wherein each of the first body and the second body is provided to be movable biaxially in a first direction, which is parallel to a thickness direction of the battery cell, and a second direction perpendicular to the first direction.

11. The folding apparatus of claim 1, wherein at least one of the first body or the second body is configured to heat the terrace.

12. A folding method for folding a terrace of a pouch type battery cell, the folding method comprising:
clamping the terrace at both sides by respective first protrusions of a pair of clamping parts;
folding the terrace by a first body disposed outside the pair of clamping parts;
allowing the pair of clamping parts to be far away from the terrace; and
moving a second body to face the first body with the terrace therebetween so as to further fold the terrace by the second body.

13. The folding method of claim 12, wherein a region, which is clamped by each of the first protrusions, of the terrace is clamped to be inclined along an inclined surface of the first protrusion.

14. The folding method of claim 13, wherein, in the folding of the terrace by the first body, the terrace is folded toward an outer surface of the first protrusion of one of the pair of clamping parts in a direction opposite to the inclined surface.

15. The folding method of claim 12, wherein, in the further folding of the terrace by the second body, the terrace is overlappingly folded between the first body and the second body.

16. The folding method of claim 12, further comprising:
separating the first body and the second body from the terrace;
rotating the pair of clamping parts so that respective second protrusions of the pair of clamping parts clamp an inner portion of the terrace than the first protrusions do; and
additionally folding the terrace by the first body.

17. The folding method of claim 16, wherein, in the additionally folding of the terrace by the first body, the terrace is folded toward an outer surface of the second protrusion of one of the pair of clamping parts.
